# EUROPEAN PATENT APPLICATION

(11) **EP 4 848 042 A1**
(43) Date of publication of application: **02.12.2026**
(21) Application number: 26180419.9
(22) Date of filing: 21.05.2026
(51) Int. Cl.: G06F 3/01, H04L 12/28

(54) **REMOTE INTERACTIONS WITH PHYSICAL DEVICES**

(30) Priority: 29.05.2025 US 202519221701
(71) Applicant: BlackBerry Limited, Waterloo, Ontario N2K 0A7 (CA)
(72) Inventor: ADAMS, Neil Patrick, Waterloo, ON, N2K 0A7 (CA); KOMINAR, Jeremy Lawson, Waterloo, ON, N2K 0A7 (CA)
(74) Representative: MERH-IP Matias Erny Reichl Hoffmann Patentanwälte PartG mbB

(57) **Abstract**

Systems, methods, and software can be used to enable interactions between an augmented reality, AR, device and one or more physical devices. In some aspects, a method includes: receiving a list of actions from a physical device, the list of actions indicating actions that the physical device can perform;
detecting, by the AR device, a classification category associated with the physical device; detecting, by the AR device, a manipulation gesture performed by a user of the AR device in the vicinity of the physical device, without being in contact with the physical device; determining a selected action when the detected manipulation gesture is coupled with an action in a list of manipulation gesture and action pairs for the detected classification category ; and sending to the physical device the selected action to perform when the selected action is comprised in the list of actions received from the physical device.

## Description

### TECHNICAL FIELD

The present disclosure relates to a technique for interacting with physical objects or devices without physically manipulating them.

### BACKGROUND

Augmented reality, AR, systems can be used to interact with physical objects or devices. A conventional way of doing this is to impose on a user of such systems a predefined list of possible/predetermined actions in conjunction with a precise list of gestures or hand movements, which are not necessarily very intuitive. This is why these hand gestures or hand movements are often displayed by an interface of the AR system. An example of an AR system is depicted in document US 2021/0405761 **Al,** especially in FIG. 10C and FIG. 12 of this document which illustrates the content displayed by an AR system to ease the interactions with physical objects or devices having communication capabilities. Therefore, this kind of system requires a period of adaptation, which can vary from person to person. In addition, these hand gestures or hand movements can differ from one AR system to another because there is no standardization effort or willingness concerning this topic from the manufacturers. For example, a given gesture such as a pinch or grab gesture can have specific actions with a first AR system on a physical object or device, but the same pinch or grab gesture can initiate other actions with a second AR system on a same physical object or device. Hence, there is a need of providing a more unified approach in the interaction with physical devices via an AR device.

### DESCRIPTION OF DRAWINGS

FIG. 1 is a schematic diagram showing an example system for interacting with one or more physical devices via an augmented reality, AR, device, according to an implementation.
FIG. 2 is a flowchart showing an example method for interacting with one or more physical devices via an AR device, according to an implementation.
FIG. 3 is a flowchart showing an example method for calibrating an AR device to interact with one or more physical devices, according to an implementation.
FIG. 4 is a high-level architecture block diagram showing an example of an AR device.

Like reference numbers and designations in the various drawings indicate like elements.

### DETAILED DESCRIPTION

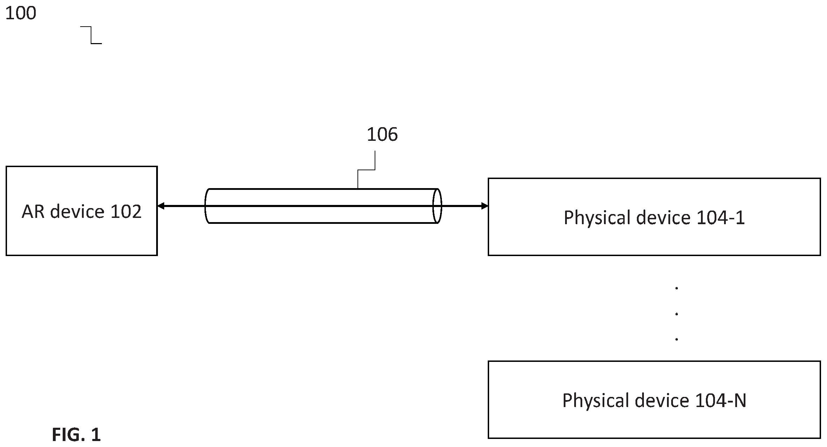

FIG. 1 is a schematic diagram showing an example system 100 for interacting with one or more physical devices 104-1, ..., 104-N via an augmented reality, AR, device 102 according to an implementation, where N is an integer greater or equal to 1.

At a high level, the N physical devices 104-1, ..., 104-N are communicatively coupled with the AR device 102 over a communication channel 106.

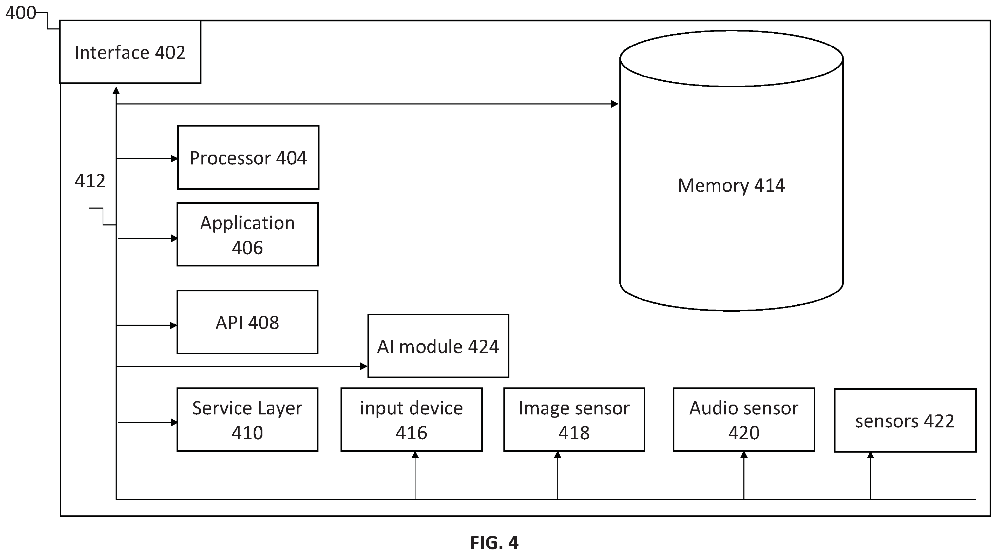

The AR device 102 can be an electronic device as described in connection with the FIG. 4. For example, an AR device 102 can be AR glasses or similar technologies. In a variant, the AR device can consist of several separate physical entities such as wireless connected earbuds comprising cameras or infrared sensors, and a mobile device or a tablet.

In one implementation, the N physical devices 104-1, ..., 104-N are in the field of view of the user of the AR device 102. Hence, the user of an AR device cannot interact with physical devices that are out of the user's field of view, even if the AR device and the physical devices are capable of interacting technically, thanks to the technical means at their disposal. According to this embodiment, it allows the user to see the concrete effect of his action on the physical devices.

The one or more physical devices 104-1, ..., 104-N can cover a wide range of devices with various functionalities. For example, a physical device can be a domestic (or home automation) device which is a smart electronic system that automates household tasks, enhances security, and or improves energy efficiency amongst other things. One of the physical devices 104-1, ..., 104-N can be a lighting control device (such as a smart bulb, or a smart switch), or an automatic faucet or tap, or a smart doorbell or a garage door or a smart oven or a smart fridge or a smart washing machine or a smart trash/bin or a smart door. This list is by no means exhaustive and is provided for illustrative purposes only. Generally speaking, any device that can be controlled by electronic activation/control means falls within the scope of the term "physical device".

The communication channel 106 refers to a dedicated pathway or medium through which data is exchanged over short distances, typically within the same vicinity (up to several meters). The communication channel 106 can be a wireless channel and relying on techniques such as Bluetooth (BLE for low energy), NFC (Near Field Communication), Wi-Fi Direct or even LiFi (or Li-Fi which is a technology which utilizes light to transmit data between devices). In one implementation, LiFi is used because it requires line-of-sight or near-field light sources, which is interesting in the context of using AR devices with the restriction related to the user's field of view.

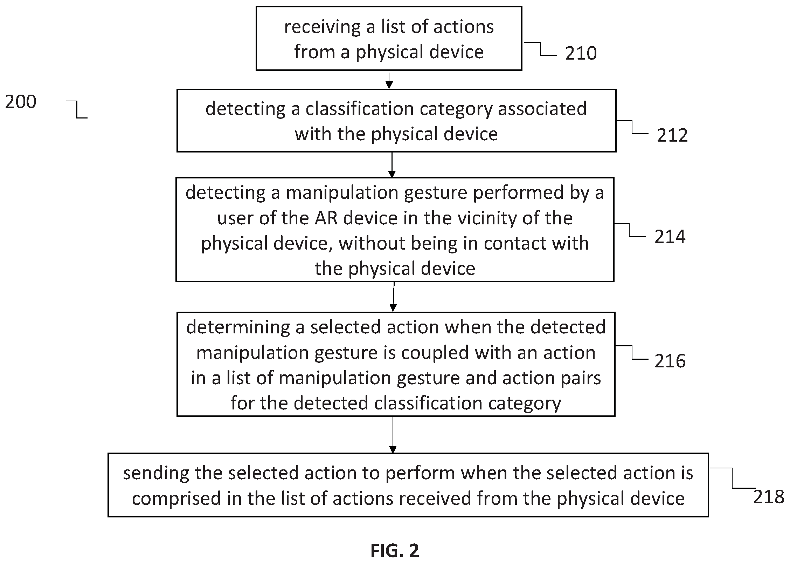

FIG. 2 is a flowchart showing an example method 200 for interacting with one or more physical devices via an AR device, according to an implementation.

In order to enable interactions between an AR device and a physical device, a communication channel must be established. Depending on the range between the AR device and the physical device, the data transfer rate to be used, the power consumption and the capacities of the AR device and the physical device (linked to protocols and hardware properties supported by these devices), a selection of a communication channel and a corresponding protocol is performed between the AR device and the physical device. In one implementation, a short-range wireless communication channel such as Bluetooth, NFC or Zigbee/Z-Wave can be used. In a variant, a Long-range/Cloud-based approach can be privilege such as MQTT/HTTP over 4G/5G or WebSockets.

In one implementation, the physical device can advertise itself via BLE in order to ease the AR device in the detection of physical devices. In a variant, the AR device can scan for nearby physical devices via Bluetooth/Wi-Fi broadcasts or QR/NFC tags. In other variants, a handshake can be used to negotiate communication parameters (e.g., IP address, ports for Wi-Fi).

Once the AR device and the physical device can exchange data via a communication channel, in a step 210, the AR device can receive a list of actions that are supported by the physical device. In one embodiment, these actions are provided through the sending of a JSON list. Hence, the actions transmitted are in a human-readable format, and the AR device can display one or more of these actions through a user interface of the AR device. In a variant, instead of a JSON list, other substitutes can be used based on XML or YAML for example. In one embodiment, the displayed actions can be classified or ordered based on a frequency of use (either obtained from the user of the AR device, or from statistics from other users that interact with the physical device). In a variant, the AR device displays images or animations instead of texts associated with the actions (transmitted in a human-readable format). For example, animated icons representative of a specific action can be displayed by the AR device to inform the user of available actions. Animated icons can be a succession of icons that when displayed over time gives an impression of a movement. For example, animated icons that make water flow from a tap can be associated with an "turn on" action for a tap. Animated icons cover a wide range of situations for which words may be ambiguous. In one embodiment, a trained machine learning, ML, model is used by the AR device in order to convert an action written in human-readable format in the JSON list into an appropriate icon or into animated icons (i.e. a sequence of icons that illustrates the action). In one implementation, the AR device uses a generative model to convert text into images/icons. In a variant, the AR device can select to display either the text of the action or animated icons/images based on the age of the user of the AR device. For example, for children that can have difficulties reading, the display of animated icons can be a way to inform what kind of actions can be executed. In one embodiment, the animated icons are related to the action independently of the related gestures or movement. Hence, the animated icons are independent of the gestures and are only specific to the action.

In a variant, the animated icons can comprise arrows to indicate an orientation of a gesture.

In another implementation, instead of a JSON list or the like, the physical device sends a list of images or icons that are associated with actions. However, texts associated with these actions are not provided in the transmission. The AR device can display these images or icons. In a variant, the AR device uses a trained ML model in order to get a text related to an action from a received image. Then, the AR device can display either only the texts of the actions as a list of actions or a combination of the images/icons with the text of the actions. In a variant, the user can disable the display of these information because the user is used to interacting with these physical devices and doesn't need a reminder.

In another embodiment, the physical device can also provide geographic information (such as latitude and longitude) in order to indicate the position of the physical device. The geographic information can be used to disable the display of the texts/images/icons information. For example, for non-moving physical devices such as a garage door, obtaining the geographic information allows the user to configure whether it is necessary to displays the list of actions.

In step 212, the AR device detects or determines a classification category associated with the physical device. The classification category is a broad term that covers or groups together different physical devices (in term of shape/dimensions) but with a common purpose. For example, faucets come in a multitude of shapes, but they generally have the same purpose (i.e. to make a liquid flow, more or less quickly, or to stop it or to moderate temperature). In one implementation, the determination can be done at least partially by processing the list of actions comprised in the JSON list. As the type of actions for interacting with physical devices may be slightly different, the AR devices can take into account this information to guide the determination of the classification category. In another embodiment, the JSON list comprises the classification category. In a variant, information from sensors (such as image sensors) can be used in the identification process of the classification category. In this way, despite their different shapes, objects or physical devices belonging to a same classification category can be used in a same way, whatever their manufacturer, at least for their common characteristics/features. In another embodiment, the AR device can use the position of the physical device for determining the classification category.

Once the determination of the classification category is done, the AR device is then able to obtain a list of pairs for the determined classification category. A pair comprises an association of an action and characteristic features or properties of a gesture. The list of pairs is stored in the AR device's memory.

In step 214, the AR device detects a manipulation gesture performed by the user of the AR device in the vicinity of the physical device, without being in contact with the physical device. The AR device can perform such detection by using hardware sensors combined with software algorithms. The hardware sensors can be for example a camera (either a RGB camera, or a depth camera or a Time-of-Flight sensor). In one embodiment, the properties/features of the manipulation gesture are then provided to a trained ML model (relying for example on a Convolutional Neural Network, CNN, architecture or a Transformer architecture or a State Space Model, SSM, architecture such as Vision Mamba). In one embodiment, a sequence of images, as well as additional information from sensors (such as a distance, a depth, a time, etc.) are combined into a vector which is used as the input vector of the trained ML model. By doing so, spatial and temporal properties/features of the detected manipulation gesture are put into a vector form. According to one embodiment, the output of the trained ML model can be viewed as a fingerprint of the detected gesture. The fingerprint is a compact representation of the detected gesture.

In a step 216, the AR device determines a selected action based on the comparison of the fingerprint of the detected gesture with the stored characteristic features or properties of the list of pairs for the considered category. In one embodiment, if a match is above a threshold of at least 80 percent, then the action is selected.

For example, the stored characteristic features or properties of the list of pairs in the memory of the AR device can be feature vectors derived from one or several images captured during the execution of the gestures via the use of one or several ML models. Then, the comparison mentioned previously can rely on the use of Cosine similarity or Euclidian distance.

In the case that the AR device is unable to detect an action from the detected gesture, a message encouraging the user to repeat the gesture is displayed.

In addition, once a match is obtained (i.e. the detected gesture corresponds to a gesture stored in the memory and is associated with an action for the category of device (in the list of pairs)), the obtained action is compared with the actions from the received JSON list. If the obtained action is not comprised in the list, it means that the physical device does not support or does not implement this action. The AR device can display a message indicating that the physical device does not support this action. However, if the obtained action is comprised in the JSON list, then the AR device considers that it is the selected action. In a variant, a semantic check can be done in order to avoid rejections for slightly different words/texts but with a similar meaning. The semantic check can be done via the use of trained ML models dedicated to the processing of languages (such as Natural language Processing, NLP, models). In one implementation, the texts or words associated with actions are converted into vectors via the use of ML models (such as BERT) and the results are compared via the use of a similarity metric (such as the cosine similarity). Depending on the proximity of the results, it is possible to determine if the texts or words are semantically similar.

The selected action is then transmitted in step 218 by the AR device to the physical device. Once the physical device received the selected action, it can perform it directly. In a variant, the physical device requests an additional confirmation by transmitting a text (such as yes or no, and the action to be done) /image/icon to be displayed by the AR device. For example, by selecting "yes" in the displayed interface, the user confirms the previous choice.

In a variant, the movements or gestures made by the user of the AR device are not limited to the hands, but generally speaking they can be limb gestures (i.e. hand, foot, arm, head or leg movements).

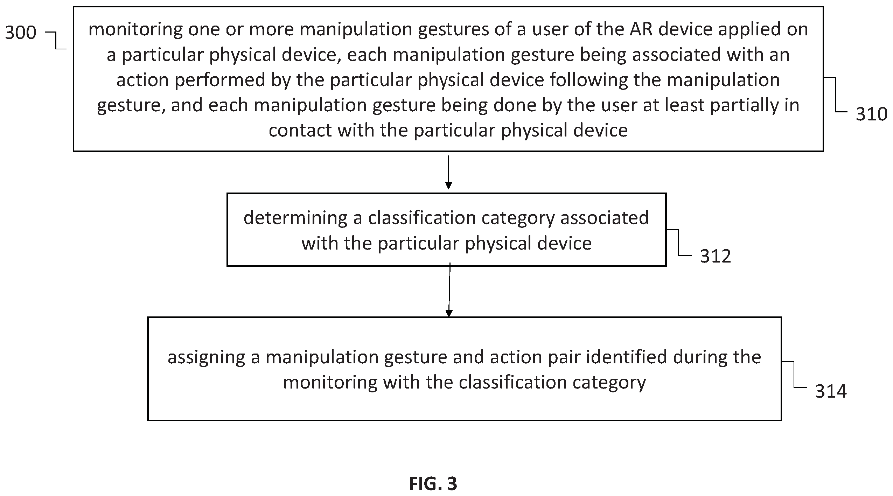

FIG. 3 is a flowchart showing an example method for calibrating an AR device to interact with one or more physical devices, according to an implementation.

As explained previously, for a category of physical devices, a list of couples of actions-gestures/movements is established and stored in the memory of the AR device. In one implementation, such list can be established by performing the method of FIG.3.

In one implementation, the calibrating method 300 can be carried out once by the device manufacturer and then this list is distributed or supplied for the AR devices. Hence, according to this embodiment, the user of the AR device does not have to perform the calibrating method. In a variant, the user of the AR device can perform the calibrating method by using the AR device itself.

In step 310, the AR device monitors one or more manipulation gestures of a user of the AR device applied on a particular physical device, each manipulation gesture being associated with an action performed by the particular physical device following the manipulation gesture, and each manipulation gesture being done by the user at least partially in contact with the particular physical device. For example, the manipulation gesture can be turning a tap clockwise or counter-clockwise to start or stop a flow. This manipulation gesture requires more or less partial contact depending on the type of faucet. Another example of manipulation gesture can be opening or closing a bin (trash can) with feet (via a foot pedal), or opening/closing a door with feet (via a slight kicking motion without physically damaging the door). The AR device can also associate a text linked to the performed action by using an audio module that records the user. For example, if the user specifies the type of action performed with spoken words such as "opening the door", "turning on tap", the AR device converts the acquired audio into text to be put in a list.

In a step 312, the AR device determines a classification category associated with the particular physical device.

In a step 314, the AR device assigns a manipulation gesture and action pair identified during the monitoring with the classification category. In one implementation, it should be noted that the manipulation gesture is represented as a fingerprint or a vector. For example, the AR device can acquire or obtain a sequence of images, as well as additional information from sensors (such as a distance, a depth, a time, etc.) during the execution of the manipulation gesture (i.e. in the monitoring step 310). Then, these data are combined into a vector which is used as the input vector of the trained ML model. The output of the trained ML model can be an example of a fingerprint of the manipulation gesture. In one embodiment, several trained ML models can be used in parallel, and the concatenation of the different outputs of the trained ML models are concatenated to define a fingerprint of the manipulation gesture.

Hence, once step 314 has been completed, the AR device stores, for a given classification category of physical devices, a list of actions and fingerprints of manipulation gestures or gestures.

Then, when the AR device detects later a manipulation gesture performed by the user in the vicinity of given physical device that belongs to a similar classification category, but without being in contact with the given physical device, the AR device is able to send to the given physical device a command instruction related to the action coupled with the detected manipulation gesture, as explained in FIG. 2.

Hence, in such way, intuitive gestures can be used when interacting remotely with physical devices. For example, in this way, when a user wants to turn on an "intelligent" facet (in the sense that it includes means of communication for exchanging data with the AR device), the user just has to make the gesture as if he were manipulating the physical facet. Similarly, to turn off an "intelligent" facet, for example, the user proceeds with the same gestures as if he were directly/physically manipulating the facet. Therefore, in a way, the calibration method enables a transposition that consists in using the same or very similar specific gestures on "known" objects or "known" devices, but at a distance. As a result, once the calibration method is done, it is very easy to interact with your environment without having to display via a user interface of the AR device pictures/drawings or animations to make it easier to carry out actions. So there is no need to use or configure unconventional gestures which requires an adaptation period that can be relatively long to become familiar with certain gestures that are not commonplace, or that have other actions on other devices.

In another embodiment, an action of the list of actions can be associated with at least two different gestures. For example, to open a "smart" door, the user of an AR device can either make a gesture consisting in manipulating a door handle or push the door with the foot.

In a variant, the action is more precise and associated with a single gesture. For example, the action of slowly opening the door can be associated with the gesture consisting in manipulating a door handle, while the action of quickly opening the door can be associated with the gesture consisting in pushing the door with the foot.

FIG. 4 is a high-level architecture block diagram showing an example of an AR device 400.

The AR device 400 can also be used to implement the operations discussed in FIGS. 2-3. The described illustration is only one possible implementation of the described subject matter and is not intended to limit the disclosure to the single described implementation. Those of ordinary skill in the art will appreciate the fact that the described components can be connected, combined, or used in alternative ways, consistent with this disclosure. For example, the functional units or modules (described in the following) of an AR device can be implemented in different physical entities/devices. In such embodiment, the AR device is rather considered as a system comprising separate devices (such as wireless connected earbuds comprising cameras or infrared sensors, and a mobile device or a tablet). In a variant, the AR device can be mobile device or a tablet (requiring a one-handed gesture if one of the hands grips the AR device).

The AR device 400 can include a computing system configured to perform the algorithm described in this disclosure. In some cases, the algorithm can be implemented in an executable computing code, e.g., C/C++ executable code. Alternatively, or in combination, the algorithm can be implemented in an application program, e.g., EXCEL. In some cases, the AR device 400 can include a standalone LINUX system that runs batch applications.

The AR device 400 may include an input device 416, such as a virtual keypad or virtual keyboard, microphone associated with an audio sensor 420, speech recognition device associated with the audio sensor 420, or another device that can accept user information, and/or an output device that conveys information associated with the operation of the AR device 400, including digital data, visual and/or audio information. In one implementation, the AR device is an optical see-through head mounted display (HMD). Hence, it allows a user to view real-world scene combined with virtual information (such as a list of actions or icons or animated icons or images as explained previously).

The AR device 400 can comprise an image sensor 418 such as a camera or an image input unit for inputting image signals, an audio sensor 420 such as a microphone, or an audio input unit for receiving input of audio information from a user. Hence, it can implement an eye-gaze tracking module and/or a gesture tracking module partially relying on the use of the camera or the image input unit.

The AR device 400 can also comprise one or more sensors 422 for collecting information around the AR device 400. For example, the one or more sensors 422 can be elements from the following list which is not exhaustive: a proximity sensor, an illumination sensor, a touch, an acceleration sensor, a magnetic sensor, a gyroscope sensor, a motion sensor, an infrared (IR) sensor, an ultrasonic sensor, a Global Positioning System (GPS) module, a Time-of-Flight sensor.

In a variant, the AR device 400 can also comprise an artificial intelligence, AI, module 424 that can comprise hardware or software components for implementing ML models. For example, the AI module 424 can comprise an AI accelerator which is a specialized hardware component designed specifically to speed up the processing of AI and ML tasks, especially neural network inference and training. In addition, hardware components relying on the use of Graphic Processing unit, GPU, can be implemented in the AI module 424.

The AR device 400 can serve as a client, network component, a server, a database or other persistency, or the like. In some implementations, one or more components of the AR device 400 may be configured to operate within a cloud-computing-based environment.

At a high level, the AR device 400 is an electronic computing device operable to receive, transmit, process, store, or manage data and information. According to some implementations, the AR device 400 may also include or be communicably coupled with an application server, e-mail server, web server, caching server, streaming data server, business intelligence (BI) server, and/or other server.

The AR device 400 can receive requests over network from a client application and respond to the received requests by processing said requests in an appropriate software application.

Each of the components of the AR device 400 can communicate using a system bus 412. In some implementations, any and/or all the components of the AR device 400, both hardware and/or software, may interface with each other and/or the interface 402 over the system bus 412, using an application programming interface (API) 408 and/or a service layer 410. The API 408 may include specifications for routines, data structures, and object classes. The API 408 may be either computer language-independent or -dependent and refer to a complete interface, a single function, or even a set of APIs. The service layer 410 provides software services to the AR device 400. The functionality of the AR device 400 may be accessible for all service consumers using this service layer. Software services, such as those provided by the service layer 410, provide reusable, defined business functionalities through a defined interface. For example, the interface 402 may be software written in JAVA, C++, or other suitable language providing data in Extensible Markup Language (XML) format or another suitable format. While illustrated as an integrated component of the AR device 400, alternative implementations may illustrate the API 408 and/or the service layer 410 as stand-alone components in relation to other components of the computer 302. Moreover, any or all parts of the API 408 and/or the service layer 410 may be implemented as child or sub-modules of another software module or hardware module, without departing from the scope of this disclosure.

The AR device 400 includes an interface 402. Although illustrated as a single interface 402 in FIG. 4, two or more interfaces 402 may be used according to particular needs, configurations, or particular implementations of the AR device 400. The interface 402 is used by the AR device 400 for communicating with other systems in a distributed environment connected to a network. Generally, the interface 402 comprises logic encoded in software and/or hardware in a suitable combination and operable to communicate with the network. More specifically, the interface 402 may comprise software supporting one or more communication protocols associated with communications such that the network or the interface's hardware are operable to communicate physical signals.

The AR device 400 includes a processor 404. Although illustrated as a single processor 404 in FIG. 4, two or more processors may be used according to particular needs, configurations, or particular implementations of the AR device 400. Generally, the processor 404 executes instructions and manipulates data to perform the operations of the AR device 400. In some cases, the processor 404 can include a data processing apparatus.

The AR device 400 also includes a memory 414 that holds data for the AR device 400. Although illustrated as a single memory 414 in FIG. 4, two or more memories may be used according to particular needs, configurations, or particular implementations of the AR device 400. While memory 414 is illustrated as an integral component of the AR device 400, in alternative implementations, memory 414 can be external to the AR device 400.

The application 406 comprises an algorithmic software engine providing functionality according to particular needs, configurations, or particular implementations of the AR device 400. Although illustrated as a single application 406, the application 406 may be implemented as multiple applications 406 on the AR device 400. In addition, although illustrated as integral to the AR device 400, in alternative implementations, the application 406 can be external to the AR device 400.

Described implementations of the subject matter can include one or more features, alone or in combination.

For example, in an implementation, it is proposed a first feature that deals with a computer-implemented method for interacting with one or more physical devices via an AR device. The method comprises:
receiving a list of actions from a physical device, the list of actions indicating actions that the physical device can perform;
detecting, by the AR device, a classification category associated with the physical device;
detecting, by the AR device, a manipulation gesture performed by a user of the AR device in the vicinity of the physical device, without being in contact with the physical device;
determining a selected action when the detected manipulation gesture is coupled with an action in a list of manipulation gesture and action pairs for the detected classification category ; and
sending to the physical device the selected action to perform when the selected action is comprised in the list of actions received from the physical device.

A second feature, combinable with any of the previous or following features, relates to a computer-implemented method for interacting that comprises displaying by the AR device the list of actions from the physical device.

A third feature, combinable with any of the previous or following features, relates to a computer-implemented method for interacting that comprises conditioning the detecting of the classification category and/or the detecting of the manipulation gesture to an activation of detection means of the AR device by the user.

A fourth feature, combinable with any of the previous or following features, relates to a computer-implemented method for interacting that comprises determining the list of manipulation gesture and action pairs for the detected classification category, the determining comprising:
monitoring by the AR device one or more manipulation gestures of the user of the AR device applied on a particular physical device, each manipulation gesture being associated with an action performed by the particular physical device following the manipulation gesture, and each manipulation gesture being done by the user at least partially in contact with the particular physical device;
determining a classification category associated with the particular physical device; and
assigning a manipulation gesture and action pair identified during the monitoring with the classification category.

A fifth feature, combinable with any of the previous or following features, relates to a computer-implemented method for interacting wherein detecting by the AR device the classification category associated with the physical device comprises at least one of: detecting with a camera module from the AR device the physical device; and detecting with a microphone module from the AR device a name of the category of the physical device pronounced by the user of the AR device.

A sixth feature, combinable with any of the previous or following features, relates to a computer-implemented method for interacting wherein detecting by the AR device the classification category and/or detecting by the AR device a manipulation gesture comprises using one or more trained ML models for identifying the classification category and/or the manipulation gesture.

A seventh feature, combinable with any of the previous or following features, relates to a computer-implemented method for interacting wherein the AR device is either a smart glasses or an AR glasses or an AR headset or a mobile device.

An eighth feature, combinable with any of the previous or following features, relates to a computer-implemented method for interacting wherein receiving the list of actions from the physical device further comprises extracting by the AR device the list of actions from a JSON formatted list of actions.

A ninth feature, combinable with any of the previous or following features, relates to a computer-implemented method for interacting wherein the manipulation gesture can be a movement associated with a hand and/or a foot and/or an arm and/or a head and/or a leg of the user of the AR device.

A tenth feature relates to a computer-implemented method for calibrating an AR device to interact with one or more physical devices. The method comprises:
monitoring by the AR device one or more manipulation gestures of a user of the AR device applied on a particular physical device, each manipulation gesture being associated with an action performed by the particular physical device following the manipulation gesture, and each manipulation gesture being done by the user at least partially in contact with the particular physical device;
determining a classification category associated with the particular physical device; and
assigning a manipulation gesture and action pair identified during the monitoring with the classification category, wherein when the AR device detects a manipulation gesture performed by the user in the vicinity of given physical device that belongs to a similar classification category, without being in contact with the given physical device, the AR device sends to the given physical device a command instruction related to the action coupled with the detected manipulation gesture.

The previously described example implementations do not define or constrain the present disclosure. Other changes, substitutions, and alterations are also possible without departing from the scope of the present disclosure.

In a variant, features previously mentioned can be implemented either in hardware or as a computer program.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method for interacting with one or more physical devices via an augmented reality, AR, device, wherein the method comprises:
receiving a list of actions from a physical device, the list of actions indicating actions that the physical device can perform;
detecting, by the AR device, a classification category associated with the physical device;
detecting, by the AR device, a manipulation gesture performed by a user of the AR device in the vicinity of the physical device, without being in contact with the physical device;
determining a selected action when the detected manipulation gesture is coupled with an action in a list of manipulation gesture and action pairs for the detected classification category; and
sending to the physical device the selected action to perform when the selected action is comprised in the list of actions received from the physical device.

2. The method of claim 1, wherein it further comprises displaying by the AR device the list of actions from the physical device.

3. The method of claim 1 or 2, wherein it further comprises conditioning the detecting of the classification category and/or the detecting of the manipulation gesture to an activation of detection means of the AR device by the user.

4. The method according to any one of the preceding claims, wherein it further comprises determining the list of manipulation gesture and action pairs for the detected classification category, the determining comprising:
monitoring by the AR device one or more manipulation gestures of the user of the AR device applied on a particular physical device, each manipulation gesture being associated with an action performed by the particular physical device following the manipulation gesture, and each manipulation gesture being done by the user at least partially in contact with the particular physical device;
determining a classification category associated with the particular physical device; and
assigning a manipulation gesture and action pair identified during the monitoring with the classification category.

5. The method of any one of the preceding claims, wherein detecting by the AR device the classification category associated with the physical device comprises at least one of:
detecting with a camera module from the AR device the physical device; and
detecting with a microphone module from the AR device a name of the category of the physical device pronounced by the user of the AR device.

6. The method of any one of the preceding claims, wherein detecting by the AR device the classification category and/or detecting by the AR device a manipulation gesture comprises using one or more trained ML models for identifying the classification category and/or the manipulation gesture.

7. The method of any one of the preceding claims, wherein the AR device is either a smart glasses or an AR glasses or an AR headset or a mobile device.

8. The method of any one of the preceding claims, wherein receiving the list of actions from the physical device further comprises extracting by the AR device the list of actions from a JSON formatted list of actions.

9. The method of any one of the preceding claims, wherein the manipulation gesture can be a movement associated with a hand and/or a foot and/or an arm and/or a head and/or a leg of the user of the AR device.

10. A method for calibrating an augmented reality, AR, device to interact with one or more physical devices, wherein the method comprising:
monitoring by the AR device one or more manipulation gestures of a user of the AR device applied on a particular physical device, each manipulation gesture being associated with an action performed by the particular physical device following the manipulation gesture, and each manipulation gesture being done by the user at least partially in contact with the particular physical device;
determining a classification category associated with the particular physical device; and
assigning a manipulation gesture and action pair identified during the monitoring with the classification category, wherein when the AR device detects a manipulation gesture performed by the user in the vicinity of given physical device that belongs to a similar classification category, without being in contact with the given physical device, the AR device sends to the given physical device a command instruction related to the action coupled with the detected manipulation gesture.

11. A computer-readable medium containing instructions which, when executed, cause an augmented reality, AR, device to perform operations for interacting with one or more physical devices, the operations comprising:
receiving a list of actions from a physical device, the list of actions indicating actions that the physical device can perform;
detecting a classification category associated with the physical device;
detecting a manipulation gesture performed by a user of the AR device in the vicinity of the physical device, without being in contact with the physical device;
determining a selected action when the detected manipulation gesture is coupled with an action in a list of manipulation gesture and action pairs for the detected classification category ; and
sending to the physical device the selected action to perform when the selected action is comprised in the list of actions received from the physical device.

12. The computer-readable medium of claim 11, wherein the operations further comprise displaying by the AR device the list of actions from the physical device.

13. The computer-readable medium of claim 11 or 12, wherein the operations further comprise conditioning the detecting of the classification category and/or the detecting of the manipulation gesture to an activation of detection means of the AR device by the user.

14. The computer-readable medium of any one of claims 11 to 13, wherein the operations further comprise determining the list of manipulation gesture and action pairs for the detected classification category, the determining comprising:
monitoring by the AR device one or more manipulation gestures of the user of the AR device applied on a particular physical device, each manipulation gesture being associated with an action performed by the particular physical device following the manipulation gesture, and each manipulation gesture being done by the user at least partially in contact with the particular physical device;
determining a classification category associated with the particular physical device; and
assigning a manipulation gesture and action pair identified during the monitoring with the classification category.

15. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations for interacting with one or more physical devices , the one or more operations comprising:
receiving a list of actions from a physical device, the list of actions indicating actions that the physical device can perform;
detecting a classification category associated with the physical device;
detecting a manipulation gesture performed by a user of the computer-implemented system in the vicinity of the physical device, without being in contact with the physical device;
determining a selected action when the detected manipulation gesture is coupled with an action in a list of manipulation gesture and action pairs for the detected classification category ; and
sending to the physical device the selected action to perform when the selected action is comprised in the list of actions received from the physical device.
